(19) Europäisches Patentamt
European Patent Office
Office européen des brevets

(11) Veröffentlichungsnummer : **0 220 585**
**B1**

(12) # EUROPÄISCHE PATENTSCHRIFT

(45) Veröffentlichungstag der Patentschrift : **22.02.89**

(51) Int. Cl.⁴ : **C 08 G 63/64**, C 08 L 69/00 // (C08L69/00, 69:00)

(21) Anmeldenummer : **86114126.5**

(22) Anmeldetag : **13.10.86**

(54) **Verfahren zur Herstellung aromatischer Polyestercarbonate mit verbesserter Kerbschlagzähigkeit, danach hergestellte Polyestercarbonate und ihre Verwendung zur Herstellung von Formkörpern, Folien und Beschichtungen.**

(30) Priorität : **23.10.85 DE 3537664**

(43) Veröffentlichungstag der Anmeldung : **06.05.87 Patentblatt 87/19**

(45) Bekanntmachung des Hinweises auf die Patenterteilung : **22.02.89 Patentblatt 89/08**

(84) Benannte Vertragsstaaten : **DE FR GB IT NL**

(56) Entgegenhaltungen : **DE–A– 3 333 858**

(73) Patentinhaber : **BAYER AG**
**Konzernverwaltung RP Patentabteilung**
**D-5090 Leverkusen 1 Bayerwerk (DE)**

(72) Erfinder : **Serini, Voler, Dr.**
**Sebbastian-kneipp-Weg 22**
**D-4150 Krefeld (DE)**
Erfinder : **Freitag, Dieter, Dr.**
**Hasenheide 10**
**D-4150 Krefeld 1 (DE)**
Erfinder : **Rathmann, Dietrich, Dr.**
**Alte Landstrasse 119**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 220 585 B1

Jouve, 18, rue St-Denis, 75001 Paris, France

**Beschreibung**

Die Erfindung betrifft thermoplastisch verarbeitbare Mischungen aromatischer Polyestercarbonate mit verbesserter Kerbschlagzähigkeit, wobei die Polyestercarbonate unterschiedlichen Estergruppengehalt aufweisen, ein Verfahren zur Herstellung dieser Mischungen und die Verwendung dieser Mischungen zur Herstellung von Formkörpern, Folien und Beschichtungen.

Aromatische Polyestercarbonate vereinigen in sich die gute Fließfähigkeit in der Schmelze aromatischer Polycarbonate und die hohe Wärmeformbeständigkeit voll-aromatischer Polyester. Sie finden daher bei Verarbeitern thermoplastischer Harze zunehmendes Interesse.

Überraschenderweise wurde nun gefunden, daß man aromatische Polyestercarbonate mit verbesserter Kerbschlagzähigkeit erhält, wenn man Polyestercarbonate stark unterschiedlichen Estergruppengehalts miteinander mischt.

Gegenstand der Erfindung ist ein Verfahren zur Herstellung von Mischungen aromatischer Polyestercarbonate auf Basis von Diphenolen, aromatischen Dicarbonsäuren, Kohlensäurederivaten, ggf. Kettenabbrechern und gegebenenfalls Verzweigungsmitteln, dadurch gekennzeichnet, daß man

I. 10 bis 90, vorzugsweise 25 bis 75, insbesondere 40 bis 60, Gew.-%, bezogen auf die Summe I + II, Polyestercarbonat mit einem Estergruppengehalt, bezogen auf die Summe von Ester- und Carbonatgruppen des Polyestercarbonats I, von 5 bis 35, vorzugsweise 10 bis 30, insbesondere 20 bis 30, Mol-% und

II. 90 bis 10, vorzugsweise 75 bis 25, insbesondere 60 bis 40, Gew.-%, bezogen auf die Summe I + II, Polyestercarbonat mit einem Estergruppengehalt, bezogen auf die Summe von Ester- und Carbonatgruppen des Polyestercarbonats II, von 60 bis 95, vorzugsweise 60 bis 85, insbesondere 70 bis 80, Mol-% in der Schmelze 50 homogenisiert, daß mindestens 50 Gew.-% unverändertes Ausgangsmaterial, bez. auf die Summe aus I und II, vorliegt.

Beim erfindungsgemäßen Verfahren wird man Bedingungen vermeiden, die eine Umesterung der Komponenten I und II zu einem Polyestercarbonat begünstigen, d. h. man wird beispielsweise bei einer Extrusion möglichst niedrige Temperaturen und möglichst kurze Verweilzeiten wählen. Die Abwesenheit vom Umesterungskatalysatoren ist bevorzugt. Sind Umesterungskatalysatoren anwesend (z. B. in Produkten, die durch Schmelzumesterung hergestellt worden sind), wird man diese vernünftigerweise desaktivieren. Eine Umesterung kann dann weitgehend vermieden werden. Unter entsprechenden Bedingungen findet Umesterung zu nicht mehr als 50, vorzugsweise nicht mehr als 30, insbesondere nicht mehr als 10 Gew.-% statt ; mit anderen Worten : Es liegen mindestens 50, vorzugsweise mindestens 70, insbesondere mindestens 90 Gew.-% unverändertes Ausgangsmaterial, bezogen auf die Summe I + II, vor.

Weiterer Gegenstand der Erfindung sind nach dem oben beschriebenen Verfahren hergestellte Mischungen.

Bevorzugte Diphenole für die Herstellung der Polyestercarbonate I und II sind Verbindungen der Formel

$$HO—Z—OH \qquad (III)$$

worin Z einen zweiwertigen ein- oder mehrkernigen aromatischen Rest mit 6-30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel

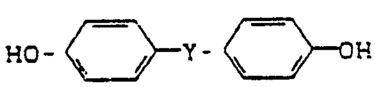 (IV)

in der Y eine Einfachbindung, einen Alkylen- oder Alkylidenrest mit 1-7 C-Atomen, einen Cycloalkylen- oder Cycloalkylidenrest mit 5-12 C-Atomen, —O—, —S—,

-S-
||
O

$—SO_2—$, oder

-C-
||
O

bedeutet, sowie deren kernalkylierte und kernhalogenierte Derivate, z. B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
α,α'-Bis-(hydroxyphenyl)-diisopropylbenzole
und
Phthaleine

sowie deren kernalkylierte und kernhalogenierte Verbindungen. Diese und weitere geeignete Diphenole sind z. B. in den US-A-3 028 365, 3 275 601, 3 148 172, 3 062 781, 2 991 273, 3 271 367, 2 999 835, 2 970 131, 1 570 704, 2 064 050, 2 063 052, 2 211 956, 2 211 957, der FR-A-1 561 518 und in der Monographie « H. Schnell, Chemistry and Physics of Polycarbonates, Interscience Publishers, New York, 1964 » beschrieben.

Die wichtigsten Diphenole seien nachfolgend namentlich aufgezählt :

Bisphenol A,
Bis-(4-hydroxyphenyl)-methan,
Bis-(4-hydroxyphenyl)-2-butan,
Bis-(4-hydroxyphenyl),
1,1-Bis-(4-hydroxyphenyl)-cyclohexan,
2,2-Bis-(3-methyl-4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
Bis-(4-hydroxyphenyl)-sulfid,
Bis-(4-hydroxyphenyl)-sulfon,
α,α'-Bis-4-hydroxyphenyl)-p-diisopropylbenzol,
Phenolphthalein.

Nach einer bevorzugten Ausführungsform enthalten unabhängig voneinander die Polyestercarbonate I und II mindestens 90, insbesondere 100 Mol-%, bezogen auf einkondensierte Diphenoleinheiten, Bisphenol-A-Reste.

Nach einer bevorzugten Ausführungsform enthalten unabhängig voneinander die Polyestercarbonate I und II mindestens 70, vorzugsweise mindestens 90, insbesondere 100, Mol-%, bezogen auf einkondensierte Dicarbonsäureeinheiten, Iso- und/oder Terephthalsäurereste. Neben Iso- bzw. Terephthalsäureresten können die bevorzugten Polyestercarbonate I und II bis zu 30, vorzugsweise bis zu 10, Mol-% einkondensierte Reste anderer aromatischer Dicarbonsäuren mit 8 bis 18 C-Atomen enthalten, wie z. B. Reste der

o-Phthalsäure,
5-tert.-Butylisophthalsäure,
Monochlorterephthalsäure,
2,5-Dichlorterephthalsäure,
Diphenylether-4,4'-dicarbonsäure,
1,2-Diphenoxyethan-4,4'-dicarbonsäure,
Diphenylmethan-4,4'-dicarbonsäure,
Diphenyl-4,4'-dicarbonsäure,
Naphthalin-1,4-dicarbonsaüre,
Naphthalin-1,8-dicarbonsäure oder
deren Mischungen.

Der Anteil der Terephthalsäurereste an den Iso- und Terephthalsäureresten der bevorzugten Polyestercarbonate I und II beträgt 0 bis 100, vorzugsweise 2 bis 15, 30 bis 70 und 80 bis 97 und insbesondere 5 bis 10, 40 bis 60 und 85 bis 94 %.

Die Polyestercarbonate I und II der bevorzugten erfindungsgemäßen Mischungen enthalten 0,5 bis 20, vorzugsweise 1,0 bis 15, insbesondere 2 bis 10 Mol-% Endgruppen, bezogen auf die Summe der den Polyestercarbonaten I und II einkondensierten Diphenolreste.

Die als Kettenabbrecher und damit zur Regelung des Molekulargewichtes geeigneten Verbindungen sind bekannt und werden beispielsweise in der EP-A-8 492 und den US-A-4 438 255 und 4 330 663

beschrieben. Bevorzugte Kettenabbrecher sind monofunktionelle aromatische Hydroxylverbindungen, wie 4-Hydroxydiphenyl, p-Nonylphenol, 4-(1.1.3.3-Tetramethylenethyl)-phenol, Chlorkohlensäureester, wie Chlorkohlensäureethyl- und -phenylester, und aliphatische und aromatische Carbonsäurechloride, wie Stearinsäurechlorid und Naphthalincarbonsäurechloride. Besonders bevorzugt sind die in der EP-A 36 080 beschriebenen Endgruppen, die der Formel

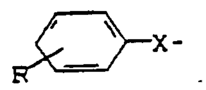 (V)

entsprechen, worin

—X— für —O— oder —CO— steht und

R einen verzweigten Alkylrest mit 8 bis 9 C-Atomen darstellt mit der Maßgabe, daß im Alkylrest R der Anteil von Methyl-Wasserstoffatomen, bezogen auf sämtliche Wasserstoffatome des Alkylrestes, 47 bis 89 % beträgt und daß R in o- und/oder p-Position steht.

Besonders bevorzugte Endgruppen sind

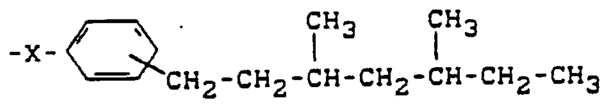 und

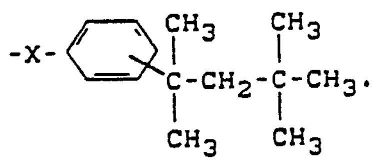

Bevorzugte Endgruppen V sind solche, in denen mindestens 80 %, insbesondere 100 % des Substituenten R in p-Position stehen.

Bevorzugte Verzweigungsmittel sind beispielsweise 3- oder mehrfunktionelle Carbonsäurechloride, wie Trimesinsäuretrichlorid, Cyanursäuretrichlorid, 3,3', 4,4'-Benzophenontetracarbonsäuretetrachlorid, 1,4,5,8-Naphthalintetracarbonsäuretetrachlorid oder Pyromellithsäuretetrachlorid, in Mengen von 0,01 bis 1,0 Mol-% (bezogen auf Dicarbonsäurereste) oder 3- oder mehrfunktionelle Phenole, wie Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl-ethan, Tri-(4-hydroxyphenyl)-phenylmethan, 2,2-Bis [4,4-bis-(4-hydroxy-phenyl)-cyclohexyl]-propan, 2,4-Bis-(4-hydroxyphenyl-isopropyl)-phenol, Tetra-(4-hydroxyphenyl) methan, 2,6-Bis-(2-hydroxy-5-methylbenzyl)-4-methyl-phenyl, 2-(4-hydroxyphenyl)-2-(2,4-dihydroxyphenyl)-propan, Tetra-(4-[4-hydroxyphenyl-isopropyl]-phenoxy)-methan, 1,4-Bis-[(4,4"-dihydroxytriphenyl)-methyl]-benzol, in Mengen von 0,01 bis 1,0 Mol-% (bezogen auf eingesetzte Diphenolreste).

Die Polyestercarbonate I und II besitzen in der Regel relative Viskositäten von 1,15 bis 2,0 vorzugsweise von 1,2 bis 1,5 (gemessen in 0,5 gew.-%iger Lösung in Dichlormethan bei 25 °C).

Polyestercarbonate ohne und mit Endgruppen V sind bekannt (DE-A-3 007 934). Sie können nach verschiedenen bekannten Verfahren hergestellt werden, z. B. durch Schmelzesterung, nach dem sogenannten Pyridin-Verfahren in homogener Lösung und nach dem Zweiphasengrenzflächenverfahren.

Die Polyestercarbonate I und II können die Estergruppen blockartig oder statistisch verteilt enthalten, je nach Herstellungsverfahren.

Die erfindungsgemäßen Mischungen können mit Füll- und Verstärkungsstoffen, wie z. B. Mineralien, Ruß, Glasfasern, C-Fasern, Metallfasern, mit Farbstoffen, Pigmenten, Thermo-, Oxydations- und UV-Stabilisatoren, Weichmachern, Gleitmitteln, Entformungshilfsmitteln, flammfest machenden Zusätzen, wie z. B. halogenierte organischen Verbindungen, Metalloxiden, Metallsalzen und weiteren Zusatzstoffen, versetzt werden.

Die erfindungsgemäßen Mischungen können z. B. für die Herstellung von Linsen, Lampenreflektoren, Autoscheinwerferreflektoren, Leuchtabdeckungen, Lampensockeln, Lampengehäusen, Hochspannungsschaltern, Steckerleisten, Zählergehäusen, Mikrowellengeschirr, Folien und Beschichtungen verwendet werden.

Weiterer Gegenstand der Erfindung ist daher die Verwendung der erfindungsgemäß hergestellten Polyestercarbonate zur Herstellung von Formkörpern, Folien und Beschichtungen.

## Beispiele

Ausgangskomponenten :

A. Bisphenol-A-Polycarbonat mit Phenyl-Endgruppen, $\eta_{rel}$ = 1.277 (PC-P) ;

B. Polyester auf Basis von Bisphenol-A, Iso- und Terephthalsäure (1 : 1) mit Phenyl-Endgruppen, $\eta_{rel}$ =1.285 (APE-P) ;
C. Polyestercarbonat auf Basis von Bisphenol-A, Iso- und Terephthalsäure (100 : 20, 8 : 20,8 Mol) mit 4.5 Mol-% Phenyl-Endgruppen entsprechend einem Estergruppengehalt von 42 Mol-%, $\eta_{rel}$ = 1.276 (V-PEC-P 50) ;
D. Polyestercarbonat auf Basis von Bisphenol-A, Iso- und Terephthalsäure (100 : 37 : 37 Mol) mit 4 Mol-% Phenyl-Endgruppen entsprechend einem Estergruppengehalt von 74 Mol-%, $\eta_{rel}$ = 1.283 (PEC-P 80) ;
E. Polyestercarbonat auf Basis von Bisphenol-A, Iso- und Terephthalsaüre (100 : 11.7 : 11.7 Mol) mit 4 Mol-% Phenyl-Endgruppen entsprechend einem Estergruppengehalt von 23 Mol-%, $\eta_{rel}$ = 1.279 (PEC-P 30) ;
F. Polyestercarbonat auf Basis von Bisphenol-A, Iso- und Terephthalsäure (100 : 37 : 37 Mol) mit 4.0 % Isooctylphenyl-Endgruppen entsprechend einem Estergruppengehalt von 74 Mol-%, $\eta_{rel}$ = 1.286, (PEC-I 80) ;
G. Polyestercarbonat auf Basis von Bisphenol-A, Iso- und Terephthalsäure (100 : 11.7 : 11.7 Mol) mit 4.0 % Isooctylphenyl-Endgruppen entsprechend einem Estergruppen-Gehalt von 23 Mol-%, $\eta_{rel}$ = 1.283 ;

Die Komponenten A und B, C, D und E sowie F und G wurden jeweils über einen Doppelwellenextruder in solchen Verhältnissen extrudiert, daß Mischungen mit einem Gesamt-Estergruppengehalt von 42 Mol-% entstanden.

Aus den erhaltenen Produkten wurden Prüfkörper hergestellt, an denen die Kerbschlagzähigkeit nach Izod bei unterschiedlichen Temperaturen bestimmt wurde. Die Ergebnisse sind in der nachfolgenden Tabelle aufgeführt.

| Meßtemperatur [° C] | Kerbschlagzähigkeit nach Izod (ASTM D 256) [J/m] | | | |
|---|---|---|---|---|
| | APE/PC | V-PEC-P 50 | PEC-P80/ PEC-P 30 | PEC-I 80/ PEC-I 30 |
| 23 | 470* | 610* | 510* | 650* |
| 10 | 450 | 570* | 480 | 600* |
| 0 | 450 | 550* | 460 | 580* |
| - 10 | 410 | 550 | 450 | 590* |
| - 20 | 410 | 540 | 460 | 580* |

* bedeutet Zähbruch

**Patentansprüche**

1. Verfahren zur Herstellung von Mischungen aromatischer Polyestercarbonate auf basis von Diphenolen, aromatischen Dicarbonsäuren, Kohlensäurederivaten, gegebenenfalls Kettenabbrechern und gegebenenfalls Verzweigungsmitteln, dadurch gekennzeichnet, daß man

I. 10 bis 90 Gew.-%, bezogen auf die Summe I + II, Polyestercarbonat mit einem Estergruppengehalt, bezogen auf die Summe von Ester- und Carbonatgruppen des Polyestercarbonats I, von 5 bis 35 Mol-% und

II. 90 bis 10 Gew.-%, bezogen auf die Summe I + II, Polyestercarbonat mit einem Estergruppengehalt, bezogen auf die Summe von Ester- und Carbonatgruppen des Polyestercarbonats II, von 60 bis 95 Mol-%

in der Schmelze 50 homogenisiert, daß mindestens 50 Gew.-% unverändertes Aüsgangsmaterial, bezogen auf die Sümme aus I und II, vorliegt.

2. Verfahren nach Anspruch 1, dadurch gekennzeichnet, daß man 25 bis 75 Gew.-% I und 75 bis 25 Gew.-% II in der Schmelze homogenisiert.

3. Verfahren nach Anspruch 1, dadurch gekennzeichnet, daß man 40 bis 60 Gew.-% I und 60 bis 40 Gew.-% II in der Schmelze homogenisiert.

4. Verfahren nach Ansprüchen 1-3, dadurch gekennzeichnet, daß der Estergruppengehalt des Polyestercarbonats I 10 bis 30 Mol-% und der des Polyestercarbonats II 60 bis 85 Mol-% betragen.

5. Verfahren nach Ansprüchen 1-3, dadurch gekennzeichnet, daß der Estergruppengehalt des Polyestercarbonats I 20 bis 30 Mol-% und der des Polyestercarbonats II 70 bis 80 Mol-% betragen.

6. Verfahren nach Ansprüchen 1-5, dadurch gekennzeichnet, daß das Polyestercarbonat I und/oder das Polyestercarbonat II mindestens 70 Mol-%, bezogen auf einkondensierte Diphenoleinheiten, Bisphenol-A-Reste enthalten.

7. Verfahren nach Anspruch 6, dadurch gekennzeichnet, daß der Gehalt an Bisphenol-A-Resten mindestens 90 Mol-% beträgt.

8. Verfahren nach Anspruch 6, dadurch gekennzeichnet, daß der Gehalt an Bisphenol-A-Resten 100 Mol-% beträgt.

9. Mischung von Polyestercarbonaten erhalten nach den Verfahren gemäß Ansprüchen 1-8.

10. Verwendung der Polyestercarbonate nach Anspruch 9 zur Herstellung von Formkörpern, Folien und Beschichtungen.

**Claims**

1. A process for the production of mixtures of aromatic polyestercarbonates based on diphenols, aromatic dicarboxylic acids, carbonic acid derivatives, optionally chain terminators and optionally branching agents, characterized in that

I. 10 to 90 % by weight, based on the sum of I + II, polyester carbonate having an ester group content, based on the sum of ester and carbonate groups of the polyester carbonate I, of from 5 to 35 mol-% and

II. 90 to 10 % by weight, based on the sum of I + II, of polyester carbonate having an ester group content, based on the sum of ester and carbonate groups of the polyester carbonate II, of from 60 to 95 mol-%,

are homogenized in the melt in such a way that at least 50 % by weight unchanged starting material, based on the sum of I + II, is present.

2. A process as claimed in claim 1, characterized in that 25 to 75 % by weight I and 75 to 25 % by weight II are homogenized in the melt.

3. A process as claimed in claim 1, characterized in that 40 to 60 % by weight I and 60 to 40 % by weight II are homogenized in the melt.

4. A process as claimed in claims 1 to 3, characterized in that the ester group content of polyester carbonate I comprises from 10 to 30 mol-% and that of polyester carbonate II from 65 to 80 mol-%.

5. A process as claimed in claims 1 to 3, characterized in that the ester group content of polyester carbonate I comprises from 20 to 30 mol-% and that of polyester carbonate II from 70 to 80 mol-%.

6. A process as claimed in claims 1 to 5, characterized in that polyester carbonate I and/or polyester carbonate II contain at least mol-%, based on co-condensed diphenol units, of bisphenol A residues.

7. A process as claimed in claim 6, characterized in that the content of bisphenol A residues comprises at least 90 mol-%.

8. A process as claimed in claim 6, characterized in that the content of bisphenol A residues comprises 100 mol-%.

9. A mixture of polyester carbonates obtained by the process claimed in Claims 1 to 8.

10. The use of the polyester carbonates according to claim 9 for the production of mouldings, films and coatings.

**Revendications**

1. Procédé pour préparer des mélanges de polyester-carbonates à base de diphénols, d'acides dicarboxyliques aromatiques, de dérivés de l'acide carbonique, éventuellement d'agents de rupture des chaînes et éventuellement d'agents de ramification, procédé caractérisé en ce qu'on homogénéise en masse fondue

I. de 10 à 90 % en poids, par rapport à la somme de I + II, d'un polyester-carbonate ayant une teneur en des groupes esters, par rapport à la somme des groupes esters et carbonates du polyester-carbonate I, de 5 à 25 moles-%, et

II. de 90 à 10 % en poids, par rapport à la somme de I + II, d'un polyester-carbonate ayant une teneur en des groupes esters, par rapport à la somme des groupes esters et carbonates du polyester-carbonate II, de 60 à 95 moles-%,

en opérant de façon qu'il demeure au moins 50 % en poids de la matière de départ inaltérée, par rapport à la somme de I + II.

2. Procédé selon la revendication 1, caractérisé en ce qu'on homogénéise en masse fondue de 25 à 75 % en poids de I et de 75 à 25 % en poids de II.

3. Procédé selon la revendication 1, caractérisé en ce qu'on homogénéise en masse fondue de 40 à 60 % en poids de I et de 60 à 40 % en poids de II.

4. Procédé selon les revendications 1 à 3, caractérisé en ce que la teneur en des groupes esters du

polyester-carbonate I représente 10 à 30 moles-% et celle du polyester-carbonate II représente 60 à 85 moles-%.

5. Procédé selon les revendications 1 à 3, caractérisé en ce que la teneur en des groupes carbonates du polyester-carbonate I représente 20 à 30 moles-% et celle du polyester-carbonate II représente 70 à 80 moles-%.

6. Procédé selon les revendications 1 à 5, caractérisé en ce que le polyester-carbonate I et/ou le polyester-carbonate II contient ou contiennent au moins 70 moles-%, par rapport aux motifs diphénols incorporés par condensation, de restes bisphénol A.

7. Procédé selon la revendication 6, caractérisé en ce que la teneur en des restes bisphénol A représente au moins 90 moles-%.

8. Procédé selon la revendication 6, caractérisé en ce que la teneur en des restes bisphénol A représente 100 moles-%.

9. Mélange de polyester-carbonates, obtenu selon le procédé d'après les revendications 1 à 8.

10. Utilisation des polyester-carbonates selon la revendication 9 pour produire des objets moulés ou conformés, des feuilles et des revêtements.